# EUROPEAN PATENT APPLICATION

(11) **EP 3 875 168 A1**
(43) Date of publication of application: **08.09.2021**
(21) Application number: 20160540.9
(22) Date of filing: 03.03.2020
(51) Int. Cl.: B01D 61/24, B01D 67/00, B01D 69/02, B01D 71/80, A61M 1/00

(54) **DIFFUSION AND/OR FILTRATION DEVICE**

(71) Applicant: Gambro Lundia AB, 226 43 Lund (SE)
(72) Inventor: Malard, Benjamin, 38280 Villette d'Anthon (FR); Lambert, Corine, 69210 Bully (FR)
(74) Representative: Perchenek, Nils

(57) **Abstract**

The present disclosure relates to a composite semipermeable membrane comprising a semipermeable support membrane coated with methylene blue, to exchangers for treating blood or plasma by extracorporeal circulation comprising this composite semipermeable membrane, as well as to methods for manufacturing these exchangers.

## Description

### Technical Field

The present disclosure concerns the field of blood and plasma treatment by extracorporeal circulation, in particular by dialysis, hemofiltration or plasmapheresis. It relates to a composite semipermeable membrane comprising a semipermeable support membrane coated with methylene blue, to exchangers for treating blood or plasma by extracorporeal circulation comprising this composite semipermeable membrane, as well as to methods for manufacturing these exchangers.

### Description of the Related Art

Nitric oxide (NO) has emerged as an important contributory factor to the pathogenesis of septic shock. It has been demonstrated that induction of renal NO associated with up-regulation of renal inducible nitric oxide synthase is associated with proximal tubule injury during systemic inflammation in humans and that blocking the only known receptor of NO, Guanylate Cyclase (sGC), may be a potential therapeutic strategy to treat septic shock-associated renal failure.

Methylene blue (MB) has the effect of scavenging nitric oxide (NO) and inhibiting nitric oxide synthase. Small ICU studies in the Netherlands demonstrate that short-term intravenous methylene blue infusion (1 mg/kg*h MB for 4h) is associated with reduced NO production and reduced urinary excretion of renal tubular injury markers (Heemskerk, S. et al.: "Short-term beneficial effects of methylene blue on kidney damage in septic shock patients", Intensive Care Med (2008) 350-354). However, the risk of prolonged systemic infusion of substantial quantities methylene blue into the patient remains unassessed. Common side effects of methylene blue injection include headache, vomiting, confusion, shortness of breath, and high blood pressure. Other side effects include serotonin syndrome, red blood cell breakdown, and allergic reactions.

### Summary

The present disclosure relates to a composite semipermeable membrane comprising a semipermeable support membrane, e.g., an AN69 dialysis membrane, grafted with methylene blue. The composite semipermeable membrane of the present disclosure provides an inhibitory effect on Guanylate Cyclase (sGC). The present disclosure also relates to exchangers for treating blood or plasma by extracorporeal circulation comprising this composite semipermeable membrane, as well as to methods for manufacturing these exchangers.

### Brief description of the drawings

- FIG. 1: is a graph of the cumulative amount of methylene blue (MB) adsorbed on the surface of the membrane over time;
- FIG. 2: is a graph of the cumulative amount of methylene blue (MB) released from the surface of the membrane over time;
- FIG. 3: is a graph of the change of methylene blue (MB) concentration in the liquid contacting the membrane.

### Detailed Description

Throughout this text, the term "semipermeable membrane" is used to denote a flat semipermeable membrane or a bundle of semipermeable hollow fibers. Also, throughout this text, the term "exchanger" is used to denote an exchanger for treating blood or plasma by extracorporeal circulation, which generally comprises two compartments separated by a semipermeable membrane, each provided with two accesses, a first compartment being intended for the circulation of the patient's blood or plasma, and a second compartment being intended for the circulation of a dialysis liquid.

One aspect of the present disclosure relates to a composite semipermeable membrane comprising a semipermeable support membrane, e.g., an AN69 membrane, grafted with methylene blue. In one embodiment, the composite semipermeable membrane comprises a polyacrylonitrile carrying anionic or anionizable groups; and the surface of the semipermeable support membrane intended to be placed in contact with the blood or plasma is coated with methylene blue. The composite semipermeable membrane of the present disclosure provides an inhibitory effect on Guanylate Cyclase (sGC).

The semipermeable support membrane comprises a polyacrylonitrile carrying anionic or anionizable groups which are selected from sulfonic, phosphonic, carboxylic, sulfuric, phosphoric groups and from the corresponding salified groups. In one embodiment, the anionic or anionizable groups of the polyacrylonitrile are sulfonic acid groups or salified sulfonic acid groups.

In a particular embodiment, the semipermeable support membrane comprises a copolymer of acrylonitrile and sodium methallyl sulfonate. Semipermeable membranes comprising a copolymer of acrylonitrile and sodium methallyl sulfonate are known in the art. These membranes are commonly referred to as AN69 membranes.

The invention also relates to an exchanger for treating blood or plasma by extracorporeal circulation, comprising two compartments separated by a semipermeable membrane having a surface oriented towards a first compartment intended for the circulation of blood or plasma, characterized in that that the surface of the semipermeable membrane oriented towards the first compartment is coated with methylene blue.

The composite semipermeable membrane may be in the form of a flat membrane or a bundle of hollow fibers.

In one embodiment, the semipermeable support membrane is comprised of hollow fiber membranes having an inner diameter in the range of from 180 to 260 µm, e.g. 210 µm, or 240 µm. In one embodiment, the wall thickness of the hollow fiber membranes is in the range of from 30 to 60 µm, e.g., 40 to 50 µm.

In one embodiment, the hollow fiber membranes show sieving coefficients, measured at 37°C in bovine plasma having a protein content of 60 g/l, of > 0.95 for inulin; > 0.55 for myoglobin; and < 0.01 for albumin.

The semipermeable support membrane is grafted with methylene blue (MB). Methylene blue is the common name of 3,7-Bis(di-methylamino) phenothiazinium chloride.

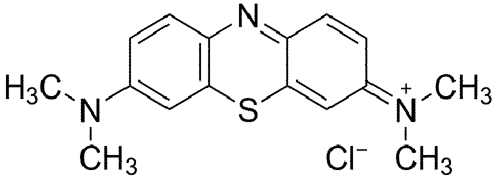

In one embodiment, both surfaces of the semipermeable support membrane are grafted with methylene blue. In another embodiment, only one of the two surfaces of the semipermeable support membrane is grafted with methylene blue.

In one embodiment, the composite semipermeable membrane takes the form of a hollow fiber membrane grafted with methylene blue. In one embodiment, both the outer surface and the lumen surface of the hollow fiber membrane are grafted with methylene blue. In another embodiment, only the lumen surface of the hollow fiber membrane is grafted with methylene blue.

In one embodiment, the concentration of methylene blue on the membrane surface is in the range of from 10 mg/m² to 200 mg/m², for instance, in the range of from 50 mg/m² to 100 mg/m², or from 100 mg/m² to 200 mg/m².

The present disclosure also relates to exchangers for treating blood or plasma by extracorporeal circulation, comprising the composite semipermeable membrane, as well as to methods for manufacturing these exchangers. In one embodiment, the exchanger features a bundle of composite semipermeable hollow fiber membranes according to the present disclosure. In a particular embodiment, the lumen surfaces of the hollow fiber membranes present in the bundle are grafted with methylene blue.

In one embodiment, the overall surface area of the membranes in the exchanger is in the range of from 0.5 to 3 m², for instance, 0.6 to 1.5 m².

The present disclosure also provides a process for the production of the exchanger of the present disclosure. The process comprises the steps of providing an exchanger comprising two compartments, each compartment having two fluid accesses, the compartments being separated by a semipermeable support membrane; and bringing an aqueous solution of methylene blue into contact with a surface of the semipermeable support membrane intended to be placed in contact with blood or plasma. Aa a result, a composite semipermeable membrane grafted with methylene blue is formed from the semipermeable support membrane.

In one embodiment of the process, the semipermeable support membrane is a bundle of hollow fiber membranes. In a further embodiment of the process, the semipermeable support membrane comprises a copolymer of acrylonitrile and sodium methallyl sulfonate.

In one embodiment of the process, a semipermeable support membrane is prepared from a solution of polyacrylonitrile carrying anionic or anionizable groups, e.g., a copolymer of acrylonitrile and sodium methallyl sulfonate, in the form of a flat sheet membrane or a bundle of hollow fiber membranes; and the components of the exchanger are assembled, including fitting the semipermeable support membrane or a bundle of hollow fibers in a case.

An aqueous solution of methylene blue is brought into contact with a surface of the semipermeable membrane intended to be placed in contact with blood or plasma. This step can be performed before or after assembly of the components of the exchanger.

In one embodiment of the process, the aqueous solution of methylene blue has a methylene blue concentration in the range of from 10 mg/L to 10 g/L, for instance, 50 mg/L to 1 g/L, or 100 mg/L to 500 mg/L. In one embodiment of the process, the aqueous solution of methylene blue is a solution of methylene blue in physiological saline, i.e., a solution containing 0.9 wt.-% sodium chloride (NaCl) in water.

In one embodiment of the process, the aqueous solution of methylene blue is circulated through a compartment of the exchanger intended to contain blood or plasma.

When the semipermeable support membrane is a flat sheet membrane, the methylene blue solution can be sprayed onto the surface of the membrane, or the membrane can be soaked in the methylene blue solution. When the semipermeable support membrane is a bundle of hollow fiber membranes, the methylene blue solution can be circulated through the lumen of the hollow fiber membranes, or the hollow fiber membranes can be soaked in the methylene blue solution.

In the event that the aqueous solution of methylene blue is brought into contact with the semipermeable support membrane after assembly of the components of the exchanger, the exchanger is purged of the solution containing methylene blue afterwards.

Optionally, the semipermeable support membrane is a glycerinated flat sheet membrane or a bundle of glycerinated hollow fiber membranes. In this case, the semipermeable support membrane has to be de-glycerinated before bringing it into contact with the methylene blue solution and forming the composite semipermeable membrane by grafting methylene blue onto the semipermeable support membrane.

Optionally, the composite semipermeable membrane is rinsed with water or physiological saline (0.9 wt.-% aqueous NaCl solution) in order to remove excess methylene blue after the grafting step.

Optionally, the composite semipermeable membrane is re-glycerinated after the grafting step and the optional rinsing step.

The composite semipermeable membrane and the exchanger, respectively, of the present disclosure may be sterilized by irradiation, in particular by gamma irradiation, or with ethylene oxide, without a significant effect on the composite semipermeable membrane.

The composite semipermeable membrane of the present disclosure releases methylene blue at a constant rate when brought into contact with blood or plasma. The release rate can be adjusted by selecting the appropriate surface area of the composite semipermeable membrane. The methylene blue released from the membrane provides an inhibitory effect on Guanylate Cyclase (sGC) and nitric oxide synthase, causing reduced NO production and reduced urinary excretion of renal tubular injury markers in a septic patient, whose blood or plasma is treated by extracorporeal circulation with an exchanger comprising the composite semipermeable membrane of the present disclosure.

The present disclosure therefore also provides a composite semipermeable membrane for inhibiting Guanylate Cyclase (sGC) and nitric oxide synthase in a patient suffering from sepsis.

Other characteristics and advantages of the invention will become apparent from the following examples and the appended drawings and figures.

It will be readily apparent to one skilled in the art that various substitutions and modifications may be made to the invention disclosed herein without departing from the scope and spirit of the invention.

The present invention is illustrated by way of non-limiting examples which are further detailed in the figures accompanying them in order to further facilitate the understanding of the invention.

### Examples

A minimodule comprising 280 hollow fiber membranes of the AN69 HF type (inner diameter 240 µm, wall thickness 50 µm) and having a surface area of 0.051 m² was primed with 60 mL saline solution (0.9 wt.-%) at a flow rate of 4.6 ml/min.

After priming, 60 ml of a solution comprising 50 mg/L methylene blue (MB) in 0.9 wt.-% saline solution was circulated through the lumen of the hollow fiber membranes for 25 minutes at a flow rate of 4.6 ml/min in a closed loop (circulation 1, C1). The process was repeated using another 60 ml of the solution comprising 50 mg/L MB in 0.9 wt.-% saline solution (circulation 2, C2).

For each circulation, samples were taken from the pool at the start and every 5 minutes, and the MB concentration in the samples was determined by UV absorbance measurement at a wavelength of 665 nm.

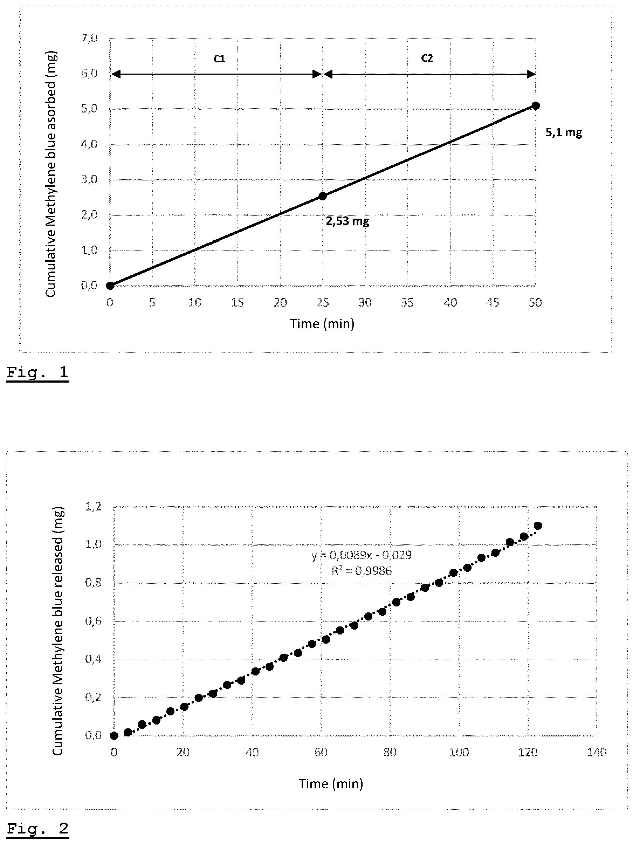

FIG. 1 is a graph of the cumulative amount of MB adsorbed on the lumen surface of the hollow fiber membranes in the minimodule over time. After circulation 1 (C1), 2.53 mg of MB have been adsorbed by the membranes, corresponding to a MB concentration on the membrane of 50 mg/m². After circulation 2 (C2), 5.1 mg of MB have been adsorbed, corresponding to a MB concentration on the membrane of 100 mg/m². No saturation effect for MB was observed at a concentration of 100 mg/m².

After the two successive circulations, the minimodule was rinsed with 30 mL of 0.9 wt.-% saline solution at a flow rate of 4.6 ml/min.

Then the minimodule was connected to a pool of 750 ml of human plasma and the plasma was passed through the lumen of the hollow fibers of the minimodule at 37±2°C for t=120 min in an open loop circuit at a flow rate of 6.1 ml/min. A plasma sample was taken at baseline and then plasma fractions of 25 ml each were collected at the filter outlet over time. For each fraction, the UV absorbance at 665 nm was measured to determine MB concentration.

FIG. 2 is a graph of the cumulative amount of MB released from the minimodule over time. As can be seen from the graph, MB release rate from the membrane is constant over time. A constant release of MB into the human plasma is observed at a rate of approximately 0.01 mg/min.

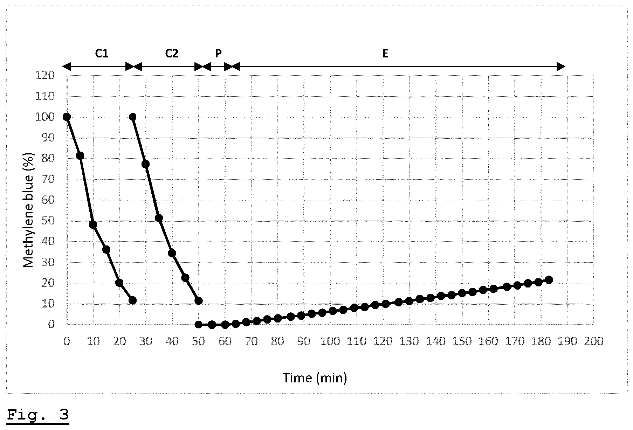

FIG. 3 is a graph of the change of methylene blue (MB) concentration in the liquid contacting the membrane. During circulation 1 (C1), the concentration of MB in the circulating MB solution drops from 100% to 11.6%, i.e., 88.4% of the MB are adsorbed on the membrane surface within 25 minutes. During circulation 2 (C2), the concentration of MB in the circulating MB solution drops from 100% to 11.5%, i.e., 88.5% of the MB are adsorbed on the membrane surface within 25 minutes. After both circulations (C1 and C2), 5.1 mg MB have been adsorbed. The adsorption capacity of the membrane has not been exhausted at this point.

Rinsing of the minimodule (P) with 0.9 wt.-% saline solution at a flow rate of 4.6 ml/min for 10 minutes, which corresponds to a standard priming procedure, does not result in a quantifiable MB release from the minimodule.

Elution (E) of MB from the minimodule with human plasma results in a constant MB release rate of approximately 0.01 mg/min, corresponding to a release rate of approximately 0.2 mg/min per m² of membrane surface.

## Claims

1. A composite semipermeable membrane comprising a semipermeable support membrane grafted with methylene blue.

2. The membrane of claim 1, wherein the semipermeable support membrane comprises a polyacrylonitrile carrying anionic or anionizable groups selected from sulfonic, phosphonic, carboxylic, sulfuric, phosphoric groups and the corresponding salified groups.

3. The membrane of claim 2, wherein the anionic or anionizable groups of the polyacrylonitrile are sulfonic acid groups or salified sulfonic acid groups.

4. The membrane of any one of claims 1 to 3, wherein the semipermeable support membrane comprises a copolymer of acrylonitrile and sodium methallyl sulfonate.

5. The membrane of any one of claims 1 to 4, wherein the semipermeable support membrane is a hollow fiber membrane having an inner diameter in the range of from 180 to 260 µm and a wall thickness in the range of from 30 to 60 µm.

6. The membrane of claim 5, wherein the lumen surface of the hollow fiber membrane is grafted with methylene blue.

7. The membrane of any one of claims 1 to 6, wherein the concentration of methylene blue on the membrane surface is in the range of from 10 mg/m² to 200 mg/m².

8. An exchanger for treating blood or plasma by extracorporeal circulation, comprising two compartments, each compartment having two fluid accesses, the compartments being separated by a semipermeable membrane according to any one of claims 1 to 7.

9. The exchanger of claim 8, wherein the semipermeable membrane is a bundle of hollow fiber membranes according to any one of claims 5 to 7.

10. A process for producing an exchanger according to claims 8 or 9, comprising the steps of providing an exchanger comprising two compartments, each compartment having two fluid accesses, the compartments being separated by a semipermeable support membrane; and bringing an aqueous solution of methylene blue into contact with a surface of the semipermeable support membrane intended to be placed in contact with blood or plasma.

11. The process of claim 10, wherein the semipermeable support membrane is a bundle of hollow fiber membranes.

12. The process of claims 10 or 11, wherein the semipermeable support membrane comprises a copolymer of acrylonitrile and sodium methallyl sulfonate.

13. The process of any one of claims 10 to 12, wherein the aqueous solution of methylene blue is circulated through a compartment of the exchanger intended to contain blood or plasma.

14. The process of any one of claims 10 to 13, wherein the aqueous solution of methylene blue has a methylene blue concentration in the range of from 10 mg/L to 10 g/L.

15. The composite semipermeable membrane according to any one of claims 1 to 7 for inhibiting Guanylate Cyclase (sGC) and nitric oxide synthase in a patient suffering from sepsis.
